(19) Europäisches Patentamt / European Patent Office / Office européen des brevets

(11) **EP 3 183 562 B1**

(12) **EUROPEAN PATENT SPECIFICATION**

(45) Date of publication and mention of the grant of the patent:
**20.10.2021 Bulletin 2021/42**

(51) Int Cl.:
**G01N 23/22** *(2018.01)*     **G21K 1/02** *(2006.01)*
**H01J 49/28** *(2006.01)*

(21) Application number: **15754196.2**

(86) International application number:
**PCT/EP2015/069259**

(22) Date of filing: **21.08.2015**

(87) International publication number:
**WO 2016/026963 (25.02.2016 Gazette 2016/08)**

(54) **NEUTRAL ATOM OR MOLECULE DETECTOR**

DETEKTOR VON NEUTRALEN ATOM ODER MOLEKÜL

DÉTECTEUR D'ATOME OU DE MOLÉCULE NEUTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 EP 14181922**

(43) Date of publication of application:
**28.06.2017 Bulletin 2017/26**

(73) Proprietor: **MB Scientific AB**
**753 23 Uppsala (SE)**

(72) Inventor: **BALTZER, Peter**
**S-753 35 Uppsala (SE)**

(74) Representative: **Brann AB**
**P.O. Box 3690**
**Drottninggatan 27**
**103 59 Stockholm (SE)**

(56) References cited:
**US-A- 4 672 204    US-A1- 2013 001 413**

- **MATTIOLI F ET AL: "A nanotechnology application for low energy neutral atom detection with high angular resolution for the BepiColombo mission to Mercury", MICROELECTRONIC ENGINEERING, ELSEVIER PUBLISHERS BV., AMSTERDAM, NL, vol. 88, no. 8, 16 February 2011 (2011-02-16), pages 2330-2333, XP028098121, ISSN: 0167-9317, DOI: 10.1016/J.MEE.2011.02.092 [retrieved on 2011-02-20]**
- **PEDEMONTE L ET AL: "High-resolution scattering apparatus for surface studies", REVIEW OF SCIENTIFIC INSTRUMENTS, AIP, MELVILLE, NY, US, vol. 73, no. 12, 21 November 2002 (2002-11-21), pages 4257-4263, XP012039517, ISSN: 0034-6748, DOI: 10.1063/1.1517147**

**Description**

TECHNICAL FIELD

The present invention relates to matter-wave microscopy and in particular to matter-wave microscopy employing a beam of neutral atoms or molecules for probing a sample.

BACKGROUND

There are a number of matter-wave microscopy techniques using particles with mass for generating an image of an object, such as electron microscopes, helium ion microscopes, and neutral helium microscopes. Neutral helium microscopes has an advantage over the other two techniques in that the particles are neutral or uncharged, which means that they are chemically inert and can be used for more fragile samples without causing damage. Further, it is not necessary to coat electrically non-conducting materials with a conductive layer. A comprehensive description of matter-wave microscopy with neutral helium, as well as a specific example of a working technique, is given in Journal of Microscopy, Vol. 229, Pt 1 2008, pp. 1-5. A related technology is described in US 2013/001413, which discloses an apparatus and method that provides relatively high resolution images using non-charged atom or molecule beams. Further, a related technology is described also in Microelectronic Engineering, Vol. 88, 16 February 2011, pp. 2330-2333, which discloses a nano-slit shutter technology for matter-wave microscopy.

Neutral helium microscopes focus or direct a narrow beam of neutral helium on a target location of a sample placed in a vacuum chamber. The beam is scanned over the sample and the scattered helium atoms are simultaneously detected by a probe. An image is then generated from the collected data. Most of the helium atoms in the beam are not detected but end up inside the vacuum chamber. The direction of these residue helium atoms is randomized through collisions with the vacuum chamber and the equipment inside it. The residue helium atoms can also be detected by the probe and therefore contribute to a background signal, which means that they decrease the signal to noise ratio (S/N) of the measurements. This effect occurs even if the vacuum chamber is continuously evacuated during the measurements, since background helium atoms are continuously generated by the beam.

It is important to have a high S/N in matter-wave microscopy, since then shorter measurement times are required and larger portions of a sample can be investigated. It is therefore an object of the present invention to improve the S/N for neutral helium microscopes. It is also an object of the present invention to reduce the influence of background helium generated by the beam of neutral helium.

SUMMARY

The object of the invention is according to a first aspect of the invention achieved by a probe for detecting neutral particles originating from a beam of neutral particles directed and scattered at a target location of a sample. The probe comprises a direction filter having a filter area. The direction filter is adapted to allow passage through the direction filter for particles travelling in a direction from the target location to the filter area. The direction filter is further adapted to impede passage through the direction filter for particles traveling in a direction that is different from a direction from the target location to the filter area. The probe further comprises a neutral particle detector for detecting particles that has passed through the direction filter. Background particles have randomized direction and the direction filter therefore has the effect that the S/N is increased.

The neutral particles may be neutral atoms or neutral molecules. The neutral atoms may be non-ionized helium atoms (He) and the neutral molecules may be non-ionized deuterium molecules ($D_2$). The neutral particles scattered at the target location may pass through the sample, e.g. corresponding to a transmission microscope technique, or alternative the neutral particles scattered at the target location may be reflected on the sample, e.g. corresponding to a reflection microscope technique.

The beam may be a beam focused on the target location, a collimated beam, or expelled at the target location.

According to the present invention, the direction filter comprises a plate-like structure having a first face and a second face. The filter area is located on the first face and the plate-like structure comprises a two-dimensional array of elongated channels leading from the first face to the second face for allowing passage through the plate-like structure for particles travelling in a direction from the target location to the filter area. That the channels are elongated has the effect that each channel has a greater length than width or height when leading or going from the first face to the second face. In other words the elongated channels may provide channels having a greater length than width or height when leading or going from the first face to the second face.

According to the present invention, the plate-like structure is a micro-channel plate and the elongated channels constitute micro-channels of the micro-channel plate, which means that the direction filter can be reproduced with good accuracy, which allows the transmission properties to be predicted with good accuracy and thereby the S/N to be optimized before a measurement. Further, a micro-channel plate has the advantage that it can be manufactures in thin sheets with a small ratio between the width and length of the channels. This means that the probe as a whole can be scaled down in size and placed closer to the sample, which in turn means that the reflected particles travel less distance to the probe and that the risk of background scattering is reduced.

A micro-channel plate is here understood to encompass planar components commonly used for detection of particles, such as electrons or ions, and impinging radiation, such as ultraviolet radiation and X-rays. It is closely related to an electron multiplier, as it typically can be used to intensify single particles or photons by secondary emission of electrodes. A micro-channel plate can typically be used to provide a spatial resolution, since it comprises many separate channels in a two dimensional array.

Typically, a micro-channel plate is manufactured from a slab of highly resistive material, for example having a thickness of 2 mm, and it has a regular array of densely distributed tiny tubes or micro channels leading from one face to the opposite face. For example, the micro channels may have a circular cross-section with a diameter of approximately 6-10 $\mu$m and may be spaced apart by approximately 15 $\mu$m. In some applications, the micro channels are parallel to one another and they may present a small angle to the surface of the faces, for example 8° to the normal.

The micro-channel plate may focus the micro-channels on the target location, or align each micro channel radially with respect to the target location, thus constituting a focused array of channels.

The passage through the plate-like structure may occur without the particles hitting the inside of an elongated channel of the two-dimensional array of elongated channels. Particles travelling in a different direction may hit the inside of an elongated channel, and thereby be prevented from passing through the channel. Each elongated channel may have a length between 0.5 and 5 mm and a diameter between 5 and 50 $\mu$m.

According to an example outside the scope of the present invention, each elongated channel may be a cylinder defining a cylinder axis, and the elongated channels may be oriented so that the cylinder axes are parallel. This has the advantage that the elongated channels can be packed closely and the number of channels can be maximized for a given filter area, which contributes to a higher transmission and an increased S/N. According to the present invention, each elongated channel is a cylinder defining a cylinder axis, and the elongated channels are oriented to define a point of intersection at which the cylinder axes meet. The point of intersection may correspond to the target location. This has the effect that the transmission is increased for particles coming from the target location and decreased for particles coming from a different direction, which contributes to increase the S/N. Each cylinder may have a circular or square cross-section.

The direction filter may be a plate, a sheet or disc-shaped. The maximum width of the filter area may be greater than the maximum thickness of the direction filter. For example, the minimum width may be more than 10 times greater than thickness, or even more than 100 times greater than the thickness.

The direction filter is understood to encompass also non-ideal direction filters. Thus, allowing passage through the direction filter for particles travelling in a direction from the target location to the filter area is understood to encompass a situation where a fraction of the particles travelling in such a direction does not pass through the directions filter, i.e. corresponding to transmission that is less than 100%. This transmission may be greater than 90%, 95%, or 99%. Further, impeding passage through the direction filter for particles traveling in a direction that is different from a direction from the target location to the filter area is understood to encompass a situation where a fraction of the particles travelling in such a direction pass through the direction filter, i.e. corresponding to a transmission that is greater than 0%. This transmission may be smaller than 10%, 5%, or 1%.

A direction that is different from a direction from the target location to the filter area is understood to encompass a direction that is parallel transported with respect to a direction from the target location to the filter area. The direction that is different from a direction from the target location to the filter area may be parallel transported by more than 1 $\mu$m, 10 $\mu$m, or 100$\mu$m with respect to a direction from the target location to the filter area. A direction that is different from a direction from the target location to the filter area is understood to encompass a direction that is at an angle with respect to a direction from the target location to the filter area. The direction that is different from a direction from the target location to the filter area may be at an angle of more than 0.01°, 0.1°, or 1° with respect to a direction from the target location to the filter area.

The direction filter may be adapted to allow passage for particles travelling from the target location to the filter area within a solid angle that is between 0.001 and 0.1 steradians, such as between 0.005 and 0.05 steradians, between 0.001 and 0.02 steradians, between 0.02 and 0.04 steradians, between 0.04 and 0.06 steradians, between 0.06 and 0.08 steradians, or between 0.08 and 0.1 steradians.

The probe may further comprise a first barrier for isolating the particles that has passed through the direction filter from the surroundings of the sample. This has the effect that the background particles generated as residue by the particle beam is prevented from mixing with the particles intended to generate a signal. The first barrier therefore contributes to increasing the S/N.

The probe may further comprise a second barrier for separating the direction filter from the surroundings of the sample. The second barrier comprises an aperture for allowing the particles travelling in a direction from the target location to the filter area to reach the filter area, and an outlet for allowing the space between the aperture and the direction filter to be evacuated. The sample may be placed in a vacuum chamber and the surroundings are here understood to encompass the space inside the vacuum chamber. Thus, a lower pressure can be kept at the direction filter than in the surroundings of the sample. This means that the amount of background particles is reduced, and the S/N is increased. Further, the lower pressure also has the effect that the mean-free path of if the particles travelling between the target location and the direction filter is increased. This is particularly the case if the aperture is placed in close proximity to the target location. The collision risk for particles intended to form a signal is reduced, which in turn means that the S/N is increased.

The area of the aperture may be smaller than the area of the outlet. This allows for a lower pressure to be reached in the space between the aperture and the direction filter, which has the effect of an increased S/N.

The probe may comprise a conduit for leading particles that has passed through the direction filter to the neutral particle detector. The neutral particle detector may be configured to detect only particles with an ionized state having the same mass to charge ratio as singly ionized $^4$He. This includes singly ionized deuterium ($D_2$). This has the effect that particles with other mass to charge ratios, such as singly ionized hydrogen, that are present in the probe between the direction filter and the neutral particle detector, e.g. in the conduit, are prevented from detection.

The neutral particle detector may comprise an ionization source for ionizing the neutral particles originating from the beam of neutral particles to singly ionized particles, an analyzer configured to single out ions with a mass to charge ratio of the singly ionized particles, and an ion detector for detecting ions singled out by the analyzer. A high S/N can be achieved by this technique, as well as a fast response to changes in the signal.

The analyzer may comprise an elongated passage between the ionization source and the ion detector and an electrode for generating a flow into the passage of the singly ionized particles generated by the ionization source. The analyzer may further comprise a magnet for generating a magnetic field along the elongated passage, a pair of elongated electrodes extending along the elongated passage for generating an electric field in the elongated passage and perpendicular to the magnetic field, and a plurality of baffles within and transverse to elongated passage for preventing ions having a mass to charge ratio different from the singly ionized particles from bouncing on the inside of analyzer and continue through the elongated passage. The analyzer may be configured to provide a magnetic field and an electric field such that singly ionized $^4$He passes through the elongated passage without hitting the inside of the analyzer. The baffles have the effect that particles with other mass to charge ratios, such as singly ionized hydrogen or deuterium, are prevented from detection.

Each baffle may be attached to one of the elongated electrodes. Each baffle may be integral with one of the elongated electrodes. An elongated electrode of the pair of elongated electrodes may have a planar surface facing the elongated passage, and a baffle of the plurality of baffles may have a cross-section with a triangular shape and one side of the triangular shape may be flush with the planar surface of the elongated electrode. Further, one side of the triangular shape may be at a right angle to the planar surface of the elongated electrode for facing the flow into the passage of the singly ionized particles.

The object of the invention is according to a second aspect of the present invention achieved by a matter-wave microscope for analyzing a sample. The matter-wave microscope comprises a vacuum chamber and a pump for generating a vacuum around the sample, a beam generator for generating a beam of neutral particles directed at the sample, and an actuator for moving the sample and/or the beam to define a series of target locations of the beam on the sample. The matter-wave microscope further comprises a probe according to the first aspect of the present invention for performing a measurement of the particles scattered from the sample at each target location, and an image generator for generating an image of the sample from the measurements.

The beam generator may comprise one or more lenses or one or more mirrors for focusing the beam of neutral particles on the sample. The one or more lenses may comprise one or more Fresnel zone plates. The beam generator may comprise a collimator for forming the beam of neutral particles to a collimated beam. The collimator may comprise a pair of apertures through which the beam passes. Alternatively, the beam generator may comprise a tube through which the beam is expelled at the sample, which has the effect that the beam will not expand in any significant way before hitting the sample. These alternative ways to generate the beam has the effect that the spatial resolution of a matter-wave microscope is improved, since it is the width of the beam of neutral particles as it hits the target location that determines the resolution when using a detector according to the first aspect of the present invention.

The object of the invention is according a third aspect of the present invention achieved by a method for generating an image of a sample by a probe according to the first aspect of the present invention. The method comprises generating a vacuum around the sample and generating a beam of neutral particles directed at the sample. The method further comprises moving the sample and/or the beam to define a series of target locations of the beam on the sample, performing a measurement of the particles scattered from the sample with the probe at each target location, and generating an image of the sample from the measurements.

The step of generating the beam of neutral particles may comprise focusing the beam on the sample, collimating the beam, or expelling the beam at the target.

Other objects, advantages and features of embodiments will be explained in the following detailed description and claims when considered in conjunction with the accompanying drawings.

BRIEF DESCRIPTION OF DRAWINGS

Fig. 1 is schematic illustration of an embodiment of a matter-wave microscope according the present invention.

Fig. 2 is a flow chart illustrating an embodiment of a method for generating an image of a sample according to the present invention.

Fig. 3A is cross-sectional view of a filter section of an embodiment of a probe according to the present invention.

Fig. 3B is cross-sectional view of the front end of the probe section illustrated in Fig. 3A.

Figs. 3C-F are perspective views of the probe section illustrated in Fig. 3A.

Fig. 4 is an illustration of a micro-channel plate according to the embodiment of the present invention described in relation to Figs. 3A-F.

Figs. 5A-B are perspective cross-sectional views of an embodiment of a neutral particle detector according the present invention.

Figs. 5C-D are perspective views of the neutral particle detector illustrated in Figs. 5A-B.

DETAILED DESCRIPTION

In the following, the different aspects of the present invention will be described in more detail with references to the drawings. For purposes of explanation and not limitation, specific details are set forth in order to provide a thorough understanding of the different embodiments. However, other embodiments that depart from these specific details may also exist.

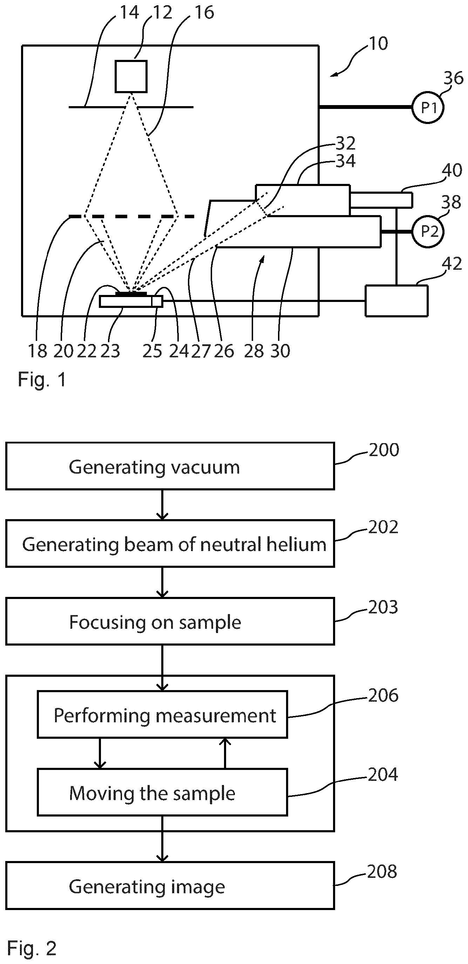

An embodiment of a matter-wave microscope 10 according to the present invention is shown in Fig. 1. The matter-wave microscope 10 has a vacuum chamber 11 and a pump 36 that generates a vacuum around sample 22. A beam generator 12 generates a beam 20 of neutral helium focused on the sample 22. The beam generator 12 has a beam source 13 that expels helium through a nozzle at a speed of about 100 m/s. The helium passes through a circular aperture 14, thus forming a cone 16 of helium. The helium then impinges on a Fresnel zone plate 18 consisting of a set of concentric rings. The plate diffracts the expanding beam of helium and the first (positive) order of diffraction falls on the sample 22 and forms the beam 20 of neutral helium focused in the sample 22.

The matter-wave microscope 10 has an actuator 23 that can move the sample 22 to define a series of target locations 21 of the beam 20 on the sample 22. The actuator 23 has a table 24 on which the sample is placed and piezo elements 25 so that the sample 22 can be scanned in two dimensions with sub-micrometer resolution.

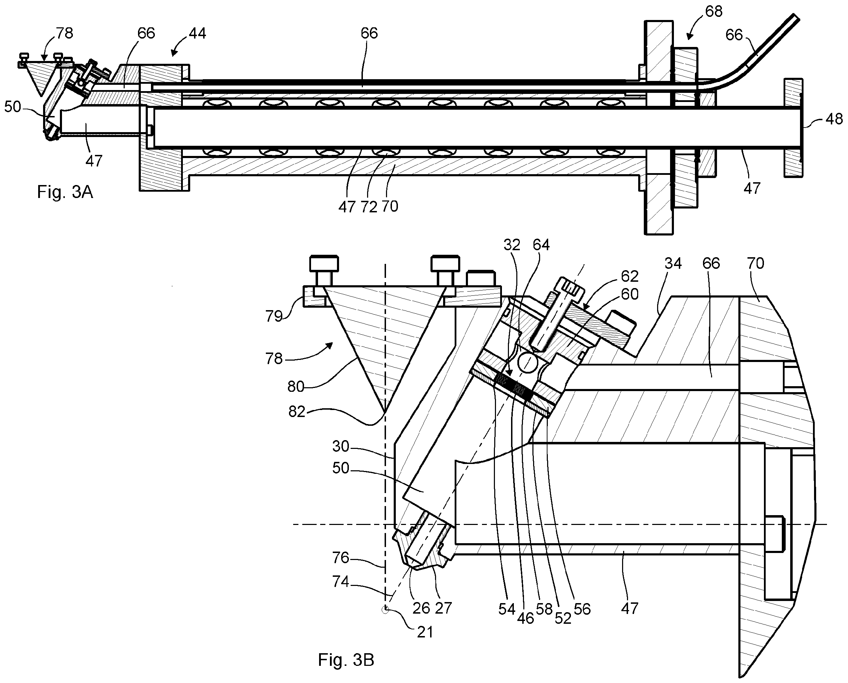

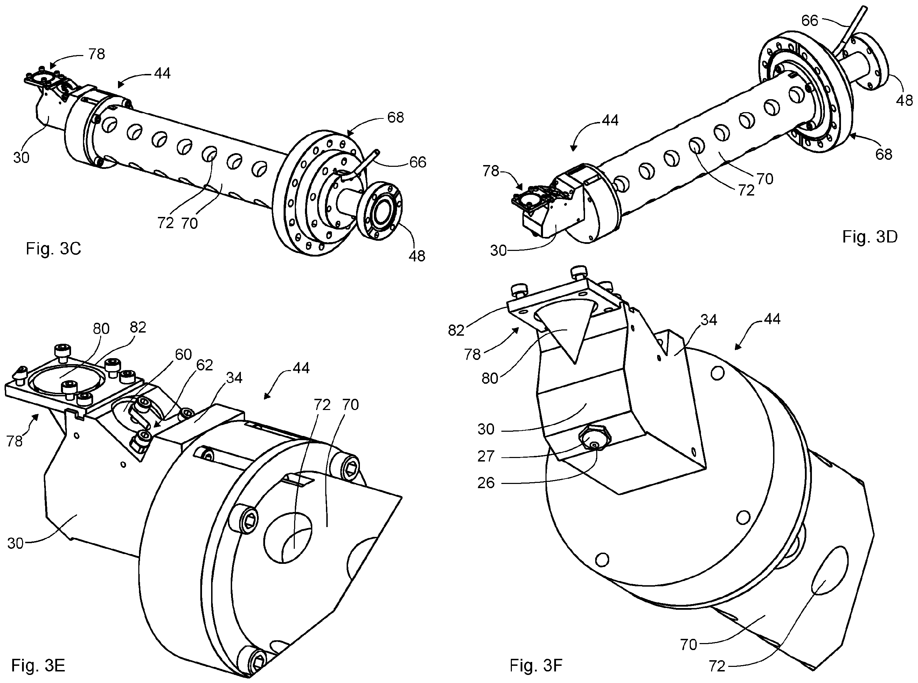

The matter-wave microscope 10 further has a probe 28 that can perform a measurement of the helium 27 scattered from and reflected on the sample 22 at each target location 21. The probe is described in further detail in relation to Figs. 3-5. The probe 28 has a filter section 44 in which a direction filter 32 is supported and a neutral particle detector or atom detector 40 for detecting particles or atoms that has passed through the direction filter 32. The matter-wave microscope 10 further has an image generator 42 that is coupled to the actuator 23 and the probe 28. The image generator 42 is configured to generate an image of the sample 22 from the measurements.

A first barrier 34 isolates atoms that have passed through the direction filter 32 from the surroundings of the sample 22, i.e. the space inside the vacuum chamber 11. A second barrier 30 separates the direction filter 32 from the surroundings of the sample 22. The second barrier 30 has an aperture 26 for allowing atoms travelling in a direction from the target location 21 to the filter area 46 to reach the filter area 46. The second barrier has a replaceable nozzle 27 in which the circular aperture 26 is positioned. This way the aperture 26 can be replaced and apertures of different diameters be used, thus allowing for the distance between the filter area 46 and the target location 21 to be varied. The second barrier 30 also has a first pipe arrangement 47 with an outlet 48 that allows the space 50 between the aperture 26 and the direction filter 32 to be evacuated by a pump 38 coupled to the outlet 48. The area of the aperture 26 is smaller than the area of the outlet 48.

The direction filter 32 allows atoms travelling in a direction from a target location 21 to the filter area 46 to pass through the direction filter 32. The direction filter 32 further impedes passage through the direction filter 32 for atoms traveling in a direction that is different from a direction from the target location 21 to the filter area 46. The direction filter 32 has front support 52 in the form of a plate with a circular aperture 54 defining the filter area. The front support 52 is replaceable so that different filter areas 46 can be defined. In the embodiment of the invention described here, the size of the filter area 46 and the distance between the filter area 46 and the target location 21 defines a solid angle of 0.02 steradian.

The direction filter 32 further has a micro-channel plate 56 held in position by the front support 52. The micro-channels 58 are marked in black in Fig. 3B. A back support 60 presses the micro-channel plate 56 against the front support 52. The back support 60 forms part of the first barrier 34 and is held in place by a spring arrangement 62.

The helium that has passed through the direction filter 32 continues through the back support 60 via a channel 64 in the back support 60. A second pipe arrangement 66 leads the helium to the atom detector 40, which is located outside the vacuum chamber 11.

The filter section 44 has a flange arrangement 68 by which it is attached to the vacuum chamber 11 and the first pipe arrangement 47 and the second pipe arrangement 66 lead through the wall of the vacuum chamber 11. The filter section 44 of the probe 28 further has a tube like support 70 that provides stable support for the front end of the filter section 44. The first pipe arrangement 47 and the second pipe arrangement 66 lead through the tube-like support 70, which has evacuation holes 72 through which gas trapped between the first pipe arrangement 47 and the tube-like support 70 can be evacuated.

The aperture 26 of the nozzle 27 and the aperture 54 of the front support are aligned along a common probe axis 74, which is at an angle of 30° to the lens axis 76 of the Fresnel zone plate 18.

The filter section 40 has a zero order stop 78 in the form of a hollow cone 80 attached to the front end of the filter section 40 by a support 79. The cone 80 is centered on the lens axis 76 and has an aperture 81 through which the first positive order of diffraction 20 can pass. The zero order of diffraction is much wider than the first positive order of diffraction and most of the zero order helium atoms are scattered on the inside of the hollow cone 80. This has the effect that less background helium atoms are generated at the target location 21 and the S/N is increased.

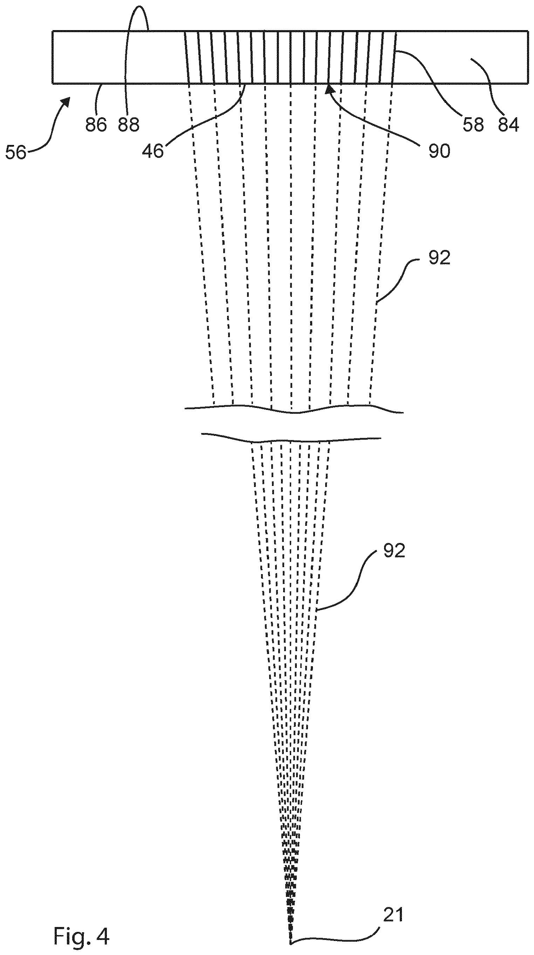

The micro-channel plate 56, which is depicted in Fig. 4, is a plate-like structure 84 that has a first face 86 and a second face 88. The filter area 46 is located on the first face 86 and the plate-like structure 84 has a two-dimensional array 90 of elongated channels 58 or micro-channels 58 that lead from the first face 86 to the second face 88 so that atoms travelling in a direction from the target location 21 to the filter area 46 can pass through the plate-like structure 84. The elongated channels 58 are tightly packed. However, for the sake of clarity, only a few of the elongated channels are shown in Fig. 4. Each elongated channel 58 has length of approximately 2 mm and a diameter of 20 $\mu$m. Further, each elongated channel 58 is a cylinder defining a cylinder axis 92, and the elongated channels 58 are oriented to define a point of intersection 21 at which the cylinder axes 92 meet. The point of intersection 21 coincides with the target location 21.

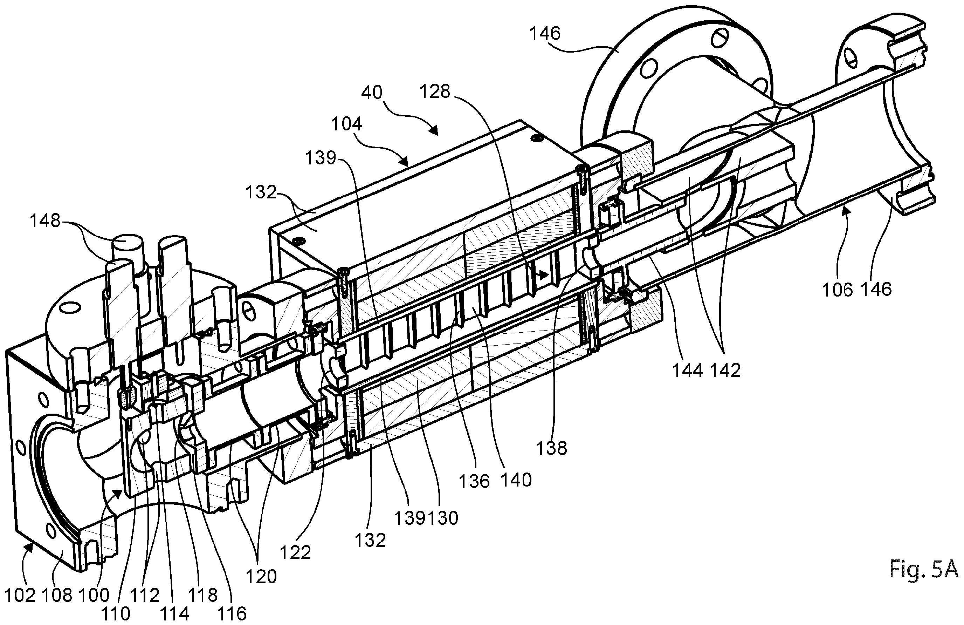

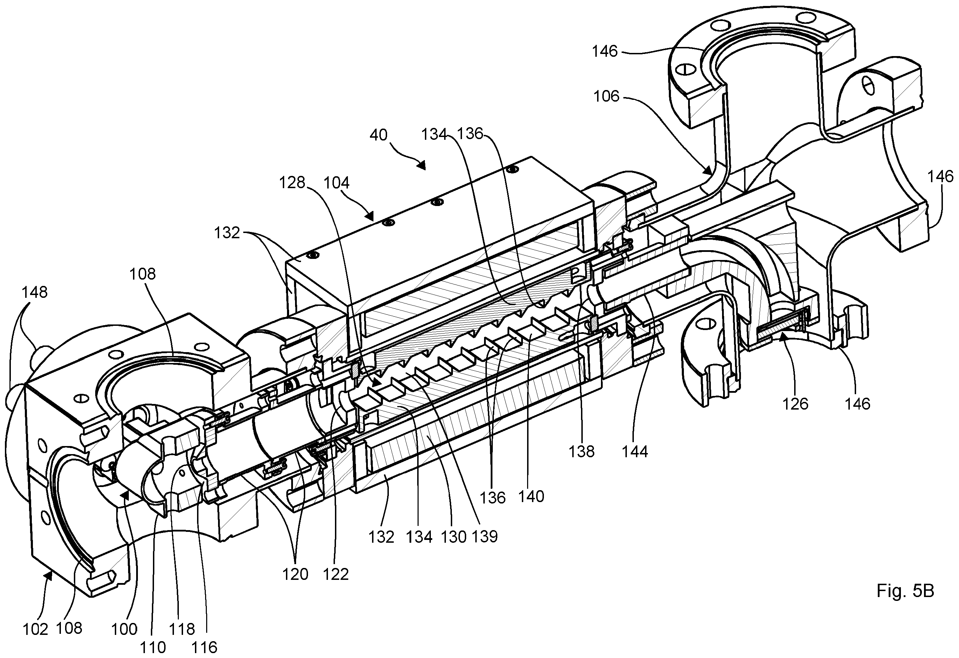

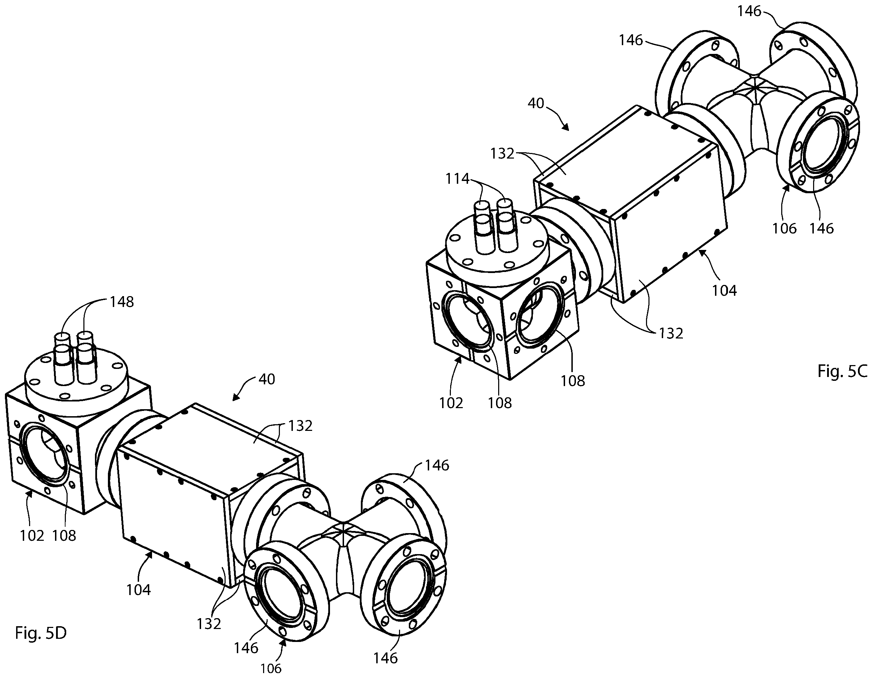

The neutral particle detector or atom detector 40, which is shown in Figs. 5A-D, has a front end housing 102, a back end housing 106, and a central housing 104 there between. An ionization source 100 is located in the front end housing 102. The neutral helium from the filter section 44 is introduced into the atom detector 40 via one of its five front end connections 108. The neutral helium enters an ionization cup via three openings 112. A tungsten filament 114 positioned in an opening of the ionization cup 110 is used as an electron emitter and the tungsten filament is held at a potential of about 80-120 V relative to the ionization cup 110 so that the emitted electrons reach suitable energies for ionizing neutral helium. An electrode 116 is held at a potential relative to the ionization cup so that the singly ionized helium is accelerated in a direction towards it. The electrode 116 has an aperture 118 through which the helium ions passes. The helium ions continue through a number of cylindrical insulators 120 and enter the central housing 104 via an aperture 120.

An analyzer 124 is located in the central housing 104 and an ion detector 126 is located in the back end housing 106. The central housing 104 defines an elongated passage 128 between the ionization source 100 and the ion detector 126. And the flow of singly ionized helium generated by the electrode 116 enters the passage 128 via the aperture 122. The analyzer 124 has ferrite magnets 130 generating a magnetic field in and along the passage 128. The magnets 130 are enclosed by soft iron plates 132 so that the magnetic field is contained inside the analyzer 124. The analyzer further has a pair of elongated electrodes 134 extending along the elongated passage 128 and generates an electric field in the passage 128 that is perpendicular to the magnetic field. The electric potential between the electrodes 134 is held at a level so that only ions with a mass to charge ratio of singly ionized $^4$He travels in a straight line through the passage 134. The singly ionized helium exits the central housing 104 through an aperture 138.The analyzer 124 further has a plurality of baffles 136 within and transverse to elongated passage 128 for preventing ions having a mass to charge ratio that is different from the mass to charge ratio of singly ionized helium from bouncing on the inside of analyzer 124 and continue through the elongated passage 128 and out through the aperture 138. The analyzer 124 further has a pair of insulators 139 extending along the elongated passage 128 and positioned between the elongated electrodes 134 and spaced apart to accommodate the elongated passage 128 between them

The baffles 136 are attached to and integral with the elongated electrodes 134. Each of the elongated electrodes 134 has a planar surface 140 facing the elongated passage 128. Each baffle 136 of the plurality of baffles has a cross-section with a triangular shape and one side of the triangular shape may be flush with the planar surface 140 of the elongated electrode 134. Further, one side of the triangular shape is at a right angle to the planar surface 140 of the elongated electrode 134 and face the flow into the passage of the singly ionized particles.

The ion detector 126 located in the back end housing 106 is in an channel electron multiplier and detects the singly ionized helium that passes through the aperture 122, i.e. it detects the ions singled out by the analyzer 124. Before reaching the ion detector 126, the direction of the flow of singly ionized helium is changed by about 90° by a pair of curved electrodes 142, which generates an electric field affecting the ions in a manner corresponding to an electric field from a point source. The curved electrodes are supported by an insulating support 144. The back end housing 106 has three back end connections 146.

Electric leads 148 are introduced via one of the front end connections 108. Electric leads can (not shown) can also be introduced via one of the back end connections 146. A pump (not shown) is attached to one of the back end connections 146 and the front end connections 108 and back end connections 146 that are not used are sealed so that the pump can evacuate the atom detector 40.

An embodiment of a method for generating an image of a sample 22 by a matter-wave microscope 10 according to the present invention is shown in Fig. 2. The method employs a probe as described above in relation to Figs 3-5 and involves the steps of generating a vacuum 200 around the sample 22, generating a beam 202 of neutral helium and focusing the beam 203 on the sample 22, moving the sample 204 to define a series of target locations 21 of the beam on the sample 22, performing a measurement 206 of the helium scattered from the sample 22 with the probe at each target location, and generating an image 208 of the sample 22 from the measurements.

A neutral helium microscope is modeled below for estimating the efficiency of an example probe. The model is rough and only intended to provide a general proof of concept. Some approximations are made that are not explicitly described. The concept of pressure is not used. Instead, the density of atoms $N/V = n$ $(m^{-3})$ is regarded. It should be noted that there is a straightforward relation to pressure at standard temperature and pressure, namely at $1.013*10^5$ Pa $6.02205*10^{23}$ atoms occupy $22.4136*10^{-3}$ $m^3$. This means simply that at 1 Pa and 0 C, there are $n = 2.6523*10^{20}$ atoms/$m^3$.

For pumping speed S the SI unit is $m^3/s$. For mass flow F, the SI unit is particles per second. It should be noted that 1 Standard Cubic Centimeters per Minute (SCCM) equals $4.4780*10^{17}$/s = $1.667*10^{-8}$ Bar*$m^3$/s = $1.688*10^{-3}$ Pa*$m^3$/s. Another relevant parameter is the conductance, which can be derived as the flux through a unit surface. The flux depends on the average speed of the particle. For helium at 0° C, the average speed is v = 1165 m/s. The particle flux per unit area F/A is then $n*v/4$, i.e. $291*n$ $(s^{-1})$ for helium.

For a hole in a thin wall, the conductance is $C_{Hole} = A*v/4$, i.e. $291 *A$ $(m^3/s)$ for helium, where A is the hole surface, or $C_{Hole} = 229*D^2 (m^3/s)$ for a circular hole. Similarly, for a long tube of arbitrary cross section, the conductance is $C_{Tube} = 4/3*A^2*v/ (O*L)$, where O is the tube circumference and L its length. In the case of a cylindrical tube with circular cross section, the conductance is $C_{Cyl.tube} = p/12*D^3*v/L$, which for helium is $305 D^3/L$ $(m^3/s)$. As the conductance of a circular hole is $p/16*D^2*v$, it is clear that $C_{Cyl.tube} = C_{Hole} / (0.75 L/D)$.

The neutral helium microscope is here further modelled with a sample or target impinged upon by a primary helium flux of $F_1$ $(s^{-1})$ and residing in a chamber pumped at pumping speed $S_1$. As all helium atoms end up in the chamber, there will be a constant background density $n_1 = F_1/S_1$ $(m^{-3})$. At a distance l from the sample, there is an area $A_{12}$ where scattered atoms from the sample are transmitted to a closed detection volume.

In this context, signal means helium atoms coming from the sample, whereas background means helium atoms entering the detector or detection volume from other directions. Of course, there may be other sources of background in the final detector output, but these are not regarded here.

The detection volume is separated from the sample spot by the conductance $C_{12}$ at a distance l. The detection volume is only evacuated via this conductance. If helium atoms with only the random velocity distribution are considered, the helium density is equal in both chambers, $n_2 = n_1 = F_1/S_1$. However, if a focused spot is present at the target, the pressure will increase in the second chamber or detection volume according to $n_2 = n_1 + F_{12} /C_{12}$, where $F_{12}$ is the flux from the spot going through $C_{12}$. It is clear that a considerable density increase can be achieved by lowering $C_{12}$.

Below, a number of setup examples are given to illustrate how the Signal to Background (S/B) is improved.

In the first setup example, a thin aperture is used. The sample chamber is evacuated with the pumping speed $S_1$ $m^3/s$. The signal flux pass through the thin aperture having area $A_{12}$ and conductance $C_{12}$ $m^3/s$, into the detection volume. Further, the detection volume is evacuated only via the thin aperture.

In the second setup example, the conductance is lowered by having elongated channels in the form of tube apertures instead of thin apertures, and also by increasing the length of the tubes. This is because the conductance is 0.75 L/D lower than an equally sized hole or thin aperture for the random flux, as is explained above. Further, in this example, the tube apertures are oriented in a focused array.

There are commercially available focused arrays, e.g. multichannel arrays similar to multi-channel plates used for electron and photon detection. A typical array has 20 mm channels, 2 mm long and roughly 2000 channels/mm$^2$. They can be provided in the focusing geometry by warm-pressing a plate with an array of parallel channels on a spherical surface portion, followed e.g. by a shaving to make the faces of the plate planar again. In this example, the open area ratio must also be regarded, which is typically 60-70 %. Thus, for the directed flux from the sample, the focused array has the conductance 0.6*291*A, and for a stochastic flux, it has the conductance 0.6*291*A/(0.75*L/D).

In the second setup example, the sample chamber is evacuated with the pumping speed $S_1$ m$^3$/s. The signal flux passes through a focused array with L/D = 100, having conductance $C_{12}$ m$^3$/s, into the detection volume. The detection volume is evacuated only via the focused array.

In the third setup example, an aperture defining a conductance is inserted between the sample and the detector input, and a pump evacuates the intermediate volume there between.

The sample chamber is evacuated with the pumping speed $S_1$ m$^3$/s. The signal flux pass through a tip with a thin aperture at distance $l_1$ from the sample, having conductance $C_{12}$ m$^3$/s, into the intermediary volume. The distance between the sample and the focused array is now represented by $l_2$. The intermediary volume is evacuated with the pumping speed $S_2$. The signal flux passes through a focused array with L/D = 100, having conductance $C_{23}$ m$^3$/s, into the detection volume. The detection volume is only evacuated via the focused array.

The signal intensity out from the sample can be described as $I_1$ = M(x,y) * $F_1$, where M(x,y) is the modulation function over the scanned area of the sample, itself being a function of the angle of pickoff. M = 0 means there is no detected flux, for example when the beam hits a hole, and M = 1/(2p) means perfectly diffuse scattering, which here will be used as a typical intensity to be detected, the signal will probably be rather small variations around this value except in the case of specular reflection or glare.

The signal flux through an aperture is calculated as $I_{12}$*$W_{12}$, where $W_{12}$ is the solid angle captured by the area $A_{12}$/$l^2$ of the focused array. It is clear that the signal flux increases in proportion to this detection solid angle, but at the same time the contrast between M = $W_1$ and 'darker' parts will be diminished.

Numerical example of the setup examples are presented below. The primary helium flux or nominal flux of the helium microscope is set to $F_1$ = $10^{10}$ s$^{-1}$. The result is given as the sum of signal and background densities, B+S. B is the helium density with no scattered intensity into the detector, e.g. if the beam hits a pocket or hole. S is the additional density occurring when the beam hits an area of the sample scattering isotropically in 2p steradians, thus giving an intensity $I_{12}$ = 1.59*$10^9$ sr$^{-1}$. The nominal detector solid angle is defined by a 5 mm round aperture at 50 mm from the sample, $W_{12}$ = 7.9*$10^{-3}$ sr. Thus, the nominal detector flux is $F_{12}$ = $I_{12}$*$W_{12}$ s$^{-1}$ = 1.25 *$10^7$ s$^{-1}$.

For the first setup example with a thin aperture, the S/B can be calculated as follows:

$$C_{12} = 291 * A_{12} = 5.71 *10^{-3} \text{ m}^3/\text{s}, S_1 = 0.5 \text{ m}^3/\text{s},$$

$$n_1 = F_1/S_1,$$

$$n_2 = n_1 + F_{12}/C_{12} = F_1/S_1 * (1 + S_1/(291*2pl^2)).$$

With $n_1$ = 2 *$10^{10}$ m$^{-3}$ and $F_{12}$ = 1.25 *$10^7$/s, the density in the detection volume is $n_2$ = 2 *$10^{10}$ + 2.19*$10^9$ m$^{-3}$, which gives a S/B of 0.11:1

For the second setup example with a focused array, the S/B can be calculated as follows:
L/D = 100,

$$C_{12} = 5.71/75 *10^{-3} = 7.61 *10^{-5} \text{ m}^3/\text{s},$$

$$n_1 = F_1/S_1,$$

$$n_2 = n_1 + F_{12}/C_{12} = F_1/S_1 * (1 + S_1*(0.75*L/D)/(291*2pl^2)).$$

With $n_1$ = 2 *$10^{10}$ m$^{-3}$ and $F_{12}$ = 1.25 *$10^7$/s, the density in the detection volume is $n_2$ = 2 *$10^{10}$ + 1.64 *$10^{11}$ m$^{-3}$, which means that the signal term increased a factor 75 and S/B = 8.2:1.

In the third setup example with an aperture inserted between the sample and the detector, setting $l_1$ = 10 mm, $l_2$ = 50 mm, and $S_2$ = 1*$10^{-2}$ m$^3$/s, the signal term is unaltered but the background term is further reduced by a factor

$S_2/C_{12}$ due to the aperture and the evacuation of the intermediate volume. With the diameter of the aperture $D_{12}$ =1 mm and the conductance of the aperture $C_{12}$ = 2.29*10$^{-4}$ m$^3$/s, the density in the detection volume is $n_2$ = 4.58*10$^8$ + 1.64*10$^{11}$m$^{-3}$, and the background term is decreased by a factor 44, which means S/B = 358:1.

ITEM LIST

10 matter-wave microscope
11 vacuum chamber
12 beam generator
14 circular aperture
16 helium cone
18 Fresnel zone plate
20 fist positive order of diffraction
21 target location
22 sample
23 actuator
24 table
25 piezo elements
26 aperture
27 nozzle
28 probe
29 scattered helium
30 second barrier
32 direction filter
34 first barrier
36 pump
38 pump
40 neutral particle detector
42 image generator
44 filter section
46 filter area
47 first pipe arrangement
48 outlet
50 between aperture and direction filter
52 front support
54 aperture
56 micro-channel plate
58 micro-channels
60 back support
62 spring arrangement
64 channel
66 second pipe arrangement
68 flange
70 support
72 evacuation holes
74 probe axis
76 lens axis
78 zero order stop
79 support
80 cone
82 aperture
84 plate-like structure
86 first face
88 second face
90 a two-dimensional array
92 cylinder axis

100 ionization source
102 front end housing
104 central housing
106 back end housing
108 front end connections
110 ionization cup
112 openings
114 tungsten filament
116 electrode
118 aperture
120 insulators
122 aperture
124 analyzer
126 ion detector
128 elongated passage
130 magnets
132 soft iron plates
134 elongated electrodes
136 baffles
138 aperture
139 insulator
140 planar surface
142 curved electrodes
144 insulating support
146 back end connections
148 electric leads
200 generating a vacuum
202 generating a beam
204 moving the sample
206 performing a measurement
208 generating an image

**Claims**

1. A probe (28) for detecting neutral particles originating from a beam of neutral particles directed and scattered at a target location (21) of a sample (22), the probe (28) comprises:

   a direction filter (32) having a filter area (46), the direction filter (32) is adapted to allow passage through the direction filter (32) for particles travelling in a direction from the target location (21) to the filter area (46), the direction filter (32) is further adapted to impede passage through the direction filter (32) for particles traveling in a direction that is different from a direction from the target location (21) to the filter area (46), and
   a neutral particle detector (40) for detecting particles that has passed through the direction filter (32),
   wherein the direction filter (32) comprises a plate-like structure (84) having a first face (86) and a second face (88), the filter area (46) is located on the first face (86) and the plate-like structure (84) comprises a two-dimensional array (90) of elongated channels (58) leading from the first face (86) to the second face (88) for allowing passage through the plate-like structure (84) for the particles travelling in a direction from the target location (21) to the filter area (46), and wherein the plate-like structure (84) is a micro-channel plate (56) and the elongated channels (58) constitute micro-channels (58) of the micro-channel plate (56),
   **characterized in that** each elongated channel (58) is a cylinder defining a cylinder axis (92), and the elongated channels (58) are oriented to define a point of intersection at which the cylinder axes (92) meet.

2. The probe (28) according to claim 1, wherein the direction filter (32) is adapted to allow passage for particles travelling from the target location (21) to the filter area (46) within a solid angle that is between 0.001 and 0.1 steradian.

3. The probe (28) according to any of the claims 1-2, wherein each elongated channel (58) has length between 0.5 and 5 mm and a diameter between 5 and 50 $\mu$m.

4. The probe (28) according to any of claims 1-3, wherein the probe (28) further comprises:
a first barrier (34) for isolating the particles that has passed through the direction filter (32) from the surroundings of the sample (22).

5. The probe (28) according to any of claims 1-4, wherein the probe (28) further comprises:
a second barrier (30) for separating the direction filter (32) from the surroundings of the sample (22), the second barrier (30) comprises:

an aperture (54) for allowing the particles travelling in a direction from the target location (21) to the filter area (46) to reach the filter area (46), and
an outlet (48) for allowing the space (50) between the aperture (54) and the direction filter (32) to be evacuated.

6. The probe (28) according to claim 5, wherein the area of the aperture (54) is smaller than the area of the outlet (48).

7. The probe (28) according to any of the claims 1-6, wherein the neutral particle detector (40) is configured to detect only particles with a ionized state having the same mass to charge ratio as singly ionized $^4$He.

8. The probe (28) according to any of the claims 1-6, wherein the neutral particle detector (40) comprises:

an ionization source (100) for ionizing the neutral particles originating from the beam of neutral particles to singly ionized particles,
an analyzer (124) configured to single out ions with a mass to charge ratio of the singly ionized particles, and
an ion detector (126) for detecting ions singled out by the analyzer (124).

9. The probe (28) according to claim 8, wherein the analyzer comprises:

an elongated passage (128) between the ionization source (100) and the ion detector (126),
an electrode (116) for generating a flow into the passage (128) of singly ionized particles generated by the ionization source (100),
a magnet (130) for generating a magnetic field along the elongated passage (128),
a pair of elongated electrodes (134) extending along the elongated passage (128) for generating an electric field in the elongated passage (128) and perpendicular to the magnetic field, and
a plurality of baffles (136) within and transverse to elongated passage (128) for preventing ions having a mass to charge ratio different from singly ionized particles from bouncing on the inside of analyzer (124) and continue through the elongated passage (128).

10. The probe (28) according to claim 9, wherein the analyzer further comprises a pair of insulators (139) extending along the elongated passage (128) and positioned between the elongated electrodes (134) and spaced apart to accommodate the elongated passage (128) between them, and each baffle (136) is attached to one of the insulators (139).

11. A matter-wave microscope (10) for analyzing a sample (22), the matter-wave microscope (10) comprises:

a vacuum chamber (11) and a pump (36) for generating a vacuum around the sample (22),
a beam generator (12) for generating a beam of neutral particles directed at the sample (22),
an actuator (23) for moving the sample (22) and/or the beam to define a series of target locations (21) of the beam on the sample (22),
a probe (28) according to any of the claims 1-10 for performing a measurement of the particles scattered from the sample (22) at each target location (21), and
an image generator (42) for generating an image of the sample (22) from the measurements.

12. A method for generating an image of a sample (22) by a probe (28) according to any of the claims 1-10, the method comprises:

generating a vacuum around the sample (22),
generating a beam of neutral particles directed at the sample (22),
moving the sample (22) and/or the beam to define a series of target locations (21) of the beam on the sample (22),
performing a measurement of the particles scattered from the sample (22) with the probe (28) at each target location (21), and
generating an image of the sample (22) from the measurements.

## Patentansprüche

1. Sonde (28) zum Detektieren von Neutralteilchen, die von einem auf einen Zielort (21) einer Probe (22) gerichteten und gestreuten Neutralteilchen-Strahl stammen, wobei die Sonde (28) Folgendes umfasst:

    einen Richtungsfilter (32) mit einem Filterbereich (46), wobei der Richtungsfilter (32) dazu geeignet ist, Teilchen, die sich in einer Richtung von dem Zielort (21) zu dem Filterbereich (46) bewegen, einen Durchgang durch den Richtungsfilter (32) zu ermöglichen, wobei der Richtungsfilter (32) ferner dazu geeignet ist, einen Durchgang durch den Richtungsfilter (32) für Teilchen zu behindern, die sich in eine Richtung bewegen, die sich von einer Richtung von dem Zielort (21) zu dem Filterbereich (46) unterscheidet, und
    einen Neutralteilchendetektor (40) zum Detektieren von Teilchen, die den Richtungsfilter (32) passiert haben, wobei der Richtungsfilter (32) eine plattenartige Struktur (84) mit einer ersten Fläche (86) und einer zweiten Fläche (88) umfasst, der Filterbereich (46) sich auf der ersten Fläche (86) befindet und die plattenartige Struktur (84) eine zweidimensionale Anordnung (90) länglicher Kanäle (58) umfasst, die von der ersten Fläche (86) zu der zweiten Fläche (88) führen, um Teilchen, die sich in einer Richtung von dem Zielort (21) zu dem Filterbereich (46) bewegen, einen Durchgang durch die plattenartige Struktur zu ermöglichen, und wobei die plattenartige Struktur (84) eine Mikrokanalplatte (56) ist und die länglichen Kanäle (58) Mikrokanäle (58) der Mikrokanalplatte (56) darstellen,
    **dadurch gekennzeichnet, dass** jeder längliche Kanal (58) ein Zylinder ist, der eine Zylinderachse (92) definiert, und die länglichen Kanäle (58) so ausgerichtet sind, dass sie einen Schnittpunkt definieren, an dem sich die Zylinderachsen (92) treffen.

2. Sonde (28) nach Anspruch 1, wobei der Richtungsfilter (32) dazu geeignet ist, Teilchen, die sich von dem Zielort (21) zu dem Filterbereich (46) bewegen, einen Durchgang innerhalb eines Raumwinkels zwischen 0,001 und 0,1 Steradiant zu ermöglichen.

3. Sonde (28) nach einem der Ansprüche 1 - 2, wobei jeder längliche Kanal (58) eine Länge zwischen 0,5 und 5 mm und einen Durchmesser zwischen 5 und 50 $\mu$m aufweist.

4. Sonde (28) nach einem der Ansprüche 1 - 3, wobei die Sonde (28) ferner Folgendes umfasst:
eine erste Barriere (34) zum Isolieren der Teilchen, die den Richtungsfilter (32) passiert haben, von der Umgebung der Probe (22).

5. Sonde (28) nach einem der Ansprüche 1 - 4, wobei die Sonde (28) ferner Folgendes umfasst:
eine zweite Barriere (30) zum Trennen des Richtungsfilters (32) von der Umgebung der Probe (22), wobei die zweite Barriere (30) Folgendes umfasst:

    eine Öffnung (54), um zu ermöglichen, dass die Teilchen, die sich in einer Richtung von dem Zielort (21) zu dem Filterbereich (46) bewegen, den Filterbereich (46) erreichen, und
    einen Auslass (48), um zu ermöglichen, dass der Raum (50) zwischen der Öffnung (54) und dem Richtungsfilter (32) evakuiert wird.

6. Sonde (28) nach Anspruch 5, wobei der Bereich der Öffnung (54) kleiner als der Bereich des Auslasses (48) ist.

7. Sonde (28) nach einem der Ansprüche 1 - 6, wobei der Neutralteilchendetektor (40) dazu konfiguriert ist, nur Teilchen mit einem ionisierten Zustand zu detektieren, der das gleiche Masse-zu-Ladung-Verhältnis wie einfach ionisiertes $^4$He aufweist.

8. Sonde (28) nach einem der Ansprüche 1 - 6, wobei der Neutralteilchendetektor (40) Folgendes umfasst:

    eine Ionisationsquelle (100) zum Ionisieren der Neutralteilchen, die aus dem Neutralteilchen-Strahl stammen, zu einfach ionisierten Teilchen,
    ein Analysegerät (124), das dazu konfiguriert ist, Ionen mit einem Masse-zu-Ladung-Verhältnis der einfach ionisierten Teilchen auszusondern, und

einen Ionendetektor (126) zum Detektieren von Ionen, die von dem Analysegerät (124) ausgesondert wurden.

9. Sonde (28) nach Anspruch 8, wobei das Analysegerät Folgendes umfasst:

einen länglichen Durchgang (128) zwischen der Ionisationsquelle (100) und dem Ionendetektor (126),
eine Elektrode (116) zum Erzeugen einer Strömung von einfach ionisierten Teilchen, die von der Ionisationsquelle (100) erzeugt werden, in den Durchgang (128),
einen Magneten (130) zum Erzeugen eines Magnetfelds entlang des länglichen Durchgangs (128),
ein Paar länglicher Elektroden (134), die sich entlang des länglichen Durchgangs (128) erstrecken, zum Erzeugen eines elektrischen Feldes in dem länglichen Durchgang (128) und senkrecht zu dem Magnetfeld, und
eine Vielzahl von Prallplatten (136) innerhalb des länglichen Durchgangs (128) und quer zu diesem, um zu verhindern, dass Ionen mit einem Masse-zu-Ladung-Verhältnis, das sich von einfach ionisierten Teilchen unterscheidet, auf der Innenseite des Analysegeräts (124) abprallen und sich durch den länglichen Durchgang (128) fortbewegen.

10. Sonde (28) nach Anspruch 9, wobei das Analysegerät ferner ein Paar Isolatoren (139) umfasst, die sich entlang des länglichen Durchgangs (128) erstrecken und zwischen den länglichen Elektroden (134) positioniert und beabstandet sind, um den länglichen Durchgang (128) dazwischen aufzunehmen, und jede Prallplatte (136) an einem der Isolatoren (139) angebracht ist.

11. Materiewellenmikroskop (10) zum Analysieren einer Probe (22), wobei das Materiewellenmikroskop (10) Folgendes umfasst:

eine Vakuumkammer (11) und eine Pumpe (36) zum Erzeugen eines Vakuums um die Probe (22) herum,
einen Strahlgenerator (12) zum Erzeugen eines auf die Probe (22) gerichteten Neutralteilchen-Strahls,
einen Aktuator (23) zum Bewegen der Probe (22) und/oder des Strahls, um eine Reihe von Zielorten (21) des Strahls auf der Probe (22) zu definieren,
eine Sonde (28) nach einem der Ansprüche 1 - 10 zum Durchführen einer Messung der von der Probe (22) gestreuten Teilchen an jedem Zielort (21), und
einen Bildgenerator (42) zum Erzeugen eines Bildes der Probe (22) aus den Messungen.

12. Verfahren zum Erzeugen eines Bildes einer Probe (22) durch eine Sonde (28) nach einem der Ansprüche 1 - 10, wobei das Verfahren Folgendes umfasst:

Erzeugen eines Vakuums um die Probe (22) herum,
Erzeugen eines auf die Probe (22) gerichteten Neutralteilchen-Strahls,
Bewegen der Probe (22) und/oder des Strahls, um eine Reihe von Zielorten (21) des Strahls auf der Probe (22) zu definieren,
Durchführen einer Messung der von der Probe (22) gestreuten Teilchen mit der Sonde (28) an jedem Zielort (21), und
Erzeugen eines Bildes der Probe (22) aus den Messungen.

**Revendications**

1. Sonde (28) de détection de particules neutres provenant d'un faisceau de particules neutres dirigé et diffusé à un emplacement cible (21) d'un échantillon (22), la sonde (28) comprend :

un filtre de direction (32) ayant une zone de filtre (46), le filtre de direction (32) est adapté pour permettre le passage à travers le filtre de direction (32) pour les particules se déplaçant dans une direction allant de l'emplacement cible (21) à la zone de filtre (46), le filtre de direction (32) est en outre adapté pour empêcher le passage à travers le filtre de direction (32) pour les particules se déplaçant dans une direction qui est différente d'une direction allant de l'emplacement cible (21) à la zone de filtre (46), et
un détecteur de particule neutre (40) destiné à détecter des particules qui sont passées à travers le filtre de direction (32),
dans laquelle le filtre de direction (32) comprend une structure en forme de plaque (84) ayant une première face (86) et une seconde face (88), la zone de filtre (46) est située sur la première face (86) et la structure en forme de plaque (84) comprend un réseau bidimensionnel (90) de canaux allongés (58) menant de la première face (86) à la seconde face (88) destinés à permettre le passage à travers la structure en forme de plaque (84) pour les particules se déplaçant dans une direction allant de l'emplacement cible (21) à la zone de filtre (46), et dans laquelle la structure en forme de plaque (84) est une plaque à micro-canaux (56) et les canaux allongés (58) constituent des micro-canaux (58) de la plaque à micro-canaux (56),

**caractérisée en ce que** chaque canal allongé (58) est un cylindre définissant un axe de cylindre (92), et les canaux allongés (58) sont orientés pour définir un point d'intersection auquel les axes de cylindre (92) se rencontrent.

2. Sonde (28) selon la revendication 1, dans laquelle le filtre de direction (32) est adapté pour permettre le passage de particules se déplaçant de l'emplacement cible (21) à la zone de filtre (46) dans un angle solide compris entre 0,001 et 0,1 stéradian.

3. Sonde (28) selon l'une quelconque des revendications 1 à 2, dans laquelle chaque canal allongé (58) a une longueur comprise entre 0,5 et 5 mm et un diamètre compris entre 5 et 50 $\mu$m.

4. Sonde (28) selon l'une quelconque des revendications 1 à 3, dans laquelle la sonde (28) comprend en outre :
une première barrière (34) destinée à isoler les particules qui sont passées à travers le filtre de direction (32) à partir de l'environnement de l'échantillon (22).

5. Sonde (28) selon l'une quelconque des revendications 1 à 4, dans laquelle la sonde (28) comprend en outre :
une seconde barrière (30) destinée à séparer le filtre de direction (32) à partir de l'environnement de l'échantillon (22), la seconde barrière (30) comprend :

une ouverture (54) destinée à permettre aux particules se déplaçant dans une direction allant de l'emplacement cible (21) à la zone de filtre (46) d'atteindre la zone de filtre (46), et
une sortie (48) destinée à permettre l'évacuation de l'espace (50) entre l'ouverture (54) et le filtre de direction (32).

6. Sonde (28) selon la revendication 5, dans laquelle la surface de l'ouverture (54) est plus petite que la surface de la sortie (48) .

7. Sonde (28) selon l'une quelconque des revendications 1 à 6, dans laquelle le détecteur de particule neutre (40) est configuré pour détecter uniquement des particules avec un état ionisé ayant le même rapport masse sur charge que le $^4$He singulièrement ionisé.

8. Sonde (28) selon l'une quelconque des revendications 1 à 6, dans laquelle le détecteur de particule neutre (40) comprend :

une source d'ionisation (100) destinée à ioniser les particules neutres provenant du faisceau de particules neutres en particules singulièrement ionisées,
un analyseur (124) configuré pour singulariser des ions avec un rapport masse sur charge des particules singulièrement ionisées, et
un détecteur d'ions (126) destiné à détecter les ions singularisés par l'analyseur (124).

9. Sonde (28) selon la revendication 8, dans laquelle l'analyseur comprend :

un passage allongé (128) entre la source d'ionisation (100) et le détecteur d'ions (126),
une électrode (116) destinée à générer un écoulement dans le passage (128) de particules singulièrement ionisées générées par la source d'ionisation (100),
un aimant (130) destiné à générer un champ magnétique le long du passage allongé (128),
une paire d'électrodes allongées (134) s'étendant le long du passage allongé (128) destinées à générer un champ électrique dans le passage allongé (128) et perpendiculaire au champ magnétique, et
une pluralité de chicanes (136) à l'intérieur et transversales au passage allongé (128) destinées à empêcher les ions ayant un rapport masse sur charge différent des particules singulièrement ionisées de rebondir à l'intérieur de l'analyseur (124) et de continuer à travers le passage allongé (128).

10. Sonde (28) selon la revendication 9, dans laquelle l'analyseur comprend en outre une paire d'isolateurs (139) s'étendant le long du passage allongé (128) et positionnés entre les électrodes allongées (134) et espacés pour recevoir le passage allongé (128) entre celles-ci, et chaque chicane (136) est fixée à un des isolateurs (139).

**11.** Microscope à onde de matière (10) destiné à analyser un échantillon (22), le microscope à onde de matière (10) comprend :

une chambre à vide (11) et une pompe (36) destinées à générer un vide autour de l'échantillon (22), un générateur de faisceau (12) destiné à générer un faisceau de particules neutres dirigé vers l'échantillon (22), un actionneur (23) destiné à déplacer l'échantillon (22) et/ou le faisceau pour définir une série d'emplacements cibles (21) du faisceau sur l'échantillon (22), une sonde (28) selon l'une quelconque des revendications 1 à 10 destinée à réaliser une mesure des particules diffusées à partir de l'échantillon (22) à chaque emplacement cible (21), et un générateur d'image (42) destiné à générer une image de l'échantillon (22) à partir des mesures.

**12.** Procédé pour la génération d'une image d'un échantillon (22) par une sonde (28) selon l'une quelconque des revendications 1 à 10, le procédé comprend :

la génération d'un vide autour de l'échantillon (22), la génération d'un faisceau de particules neutres dirigé vers l'échantillon (22), le déplacement de l'échantillon (22) et/ou le faisceau pour définir une série d'emplacements cibles (21) du faisceau sur l'échantillon (22), la réalisation d'une mesure des particules diffusées à partir de l'échantillon (22) avec la sonde (28) à chaque emplacement cible (21), et la génération d'une image de l'échantillon (22) à partir des mesures.

Fig. 1

Fig. 2

Fig. 3A

Fig. 3B

Fig. 3D

Fig. 3C

Fig. 3F

Fig. 3E

Fig. 4

Fig. 5A

Fig. 5B

146

146

106

146

126

144

138

140

136

134 136

40

128 104

132

136 130 139

134 130

132

122

120

108

148

118 116

110

100

102 108

Fig. 5C

Fig. 5D

EP 3 183 562 B1

**EP 3 183 562 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013001413 A

**Non-patent literature cited in the description**

- *Journal of Microscopy,* 2008, vol. 229, 1-5

- *Microelectronic Engineering,* 16 February 2011, vol. 88, 2330-2333